# EUROPÄISCHE PATENTSCHRIFT

(11) **EP 0 816 678 B1**
(45) Veröffentlichungstag und Bekanntmachung des Hinweises auf die Patenterteilung: **10.09.2003**
(21) Anmeldenummer: 97106175.9
(22) Anmeldetag: 15.04.1997
(51) Int. Cl.: F04B 49/08

(54) **Hydraulische Regeleinrichtung zum parallelen Regeln mehrerer hydrostat. Verstellpumpen**
Hydraulic control circuit to control several variable displacement pumps in parallel
Dispositif de commande hydraulique pour la commande d'une pluralité de pompes à déplacement variable

(30) Priorität: 03.07.1996 DE 19626793
(43) Veröffentlichungstag der Anmeldung: 07.01.1998
(73) Patentinhaber: BRUENINGHAUS HYDROMATIK GMBH, 89275 Elchingen (DE)
(72) Erfinder: Krebs, Clemens, 72070 Tübingen (DE)
(74) Vertreter: Körfer, Thomas, Dipl.-Phys.

(56) Entgegenhaltungen:
- EP-A- 0 284 987
- EP-A- 0 284 988
- DE-A- 2 505 779
- DE-A- 3 742 111
- DE-A- 4 118 869
- DE-C- 4 208 925

## Beschreibung

Die Erfindung betrifft eine hydraulische Regeleinrichtung zum parallelen Regeln mehrerer in eine gemeinsame Arbeitsleitung fördernder, hydrostatischer Verstellpumpen.

Eine derartige hydraulische Regeleinrichtung ist bereits aus der DE 37 11 049 C2 und der zugehörigen Zusatzanmeldung DE 37 42 111 C2 bekannt. Aus diesen Druckschriften geht eine hydraulische Regeleinrichtung für hydrostatische Verstellpumpen, die in eine gemeinsame Arbeitsleitung fördern, hervor. Die Regeleinrichtung umfaßt jeweils einen Druckregler, der für jede Verstellpumpe separat vorgesehen ist. Dem Druckregler ist ein von dem Stellkolben der Verstellvorrichtung angesteuertes Steuermittel nachgeschaltet, das den Rückfluß von Druckfluid aus dem Druckregler in die Tankleitung zur Lastverteilung der Verstellpumpen einregelt. Nachteilig ist bei dieser bekannten Regeleinrichtung, daß sowohl der Druckregler als auch das nachgeschaltete Steuermittel für jede Verstellpumpe separat vorgesehen sind, was zu einem hohen Ventilaufwand für die Regeleinrichtung führt. Ferner findet keine Leistungsregelung statt.

Aus der DE 42 08 925 C1 geht eine Leistungsregelung für zwei Verstellpumpen hervor, die in unterschiedliche Arbeitsleitungen fördern. Zur Leistungsregelung ist in dem Stellkolben der Verstellvorrichtung jeder Verstellpumpe eine Druckkammer vorgesehen, in welcher ein auf einen Schwenkhebel einwirkender Schwenkkolben beweglich ist. Dabei ändert sich der Hebelarm, mit welchem der Schwenkkolben auf den Schwenkhebel einwirkt in Abhängigkeit von der Stellung des Stellkolbens und somit in Abhängigkeit von dem Fördervolumen der Verstellpumpe. Durch die Rückwirkung des Schwenkhebels auf ein Regelventil wird eine Leistungsregelung erreicht, bei welcher das Produkt aus Arbeitsdruck und Fördervolumen konstant gehalten wird.

Der vorliegenden Erfindung liegt die Aufgabe zugrunde, die bekannte hydraulische Regeleinrichtung so weiterzubilden, daß die Anzahl der Regelventile und somit der Aufwand der Regeleinrichtung verringert wird.

Die Aufgabe wird durch die Merkmale des Anspruches 1 gelöst.

Der Erfindung liegt die Erkenntnis zugrunde, daß der Aufwand für die Regeleinrichtung durch Kombination einer für jede Verstellpumpe vorgesehenen Leistungs-Regeleinrichtung mit einer für alle Verstellpumpen gemeinsam vorgesehenen zentralen Druck-Regeleinrichtung erheblich reduziert werden kann. Entsprechend der erfindungsgemäßen Lösung sind die für jede Verstellpumpe vorgesehenen Leistungs-Regeleinrichtungen über eine Steuerdruckleitung verbunden. Der in der Steuerdruckleitung herrschende Steuerdruck gibt das konstante Produkt aus Arbeitsdruck und Fördervolumen einer jeden Verstellpumpe vor. Der Steuerdruck wird von einer zentralen Druck-Regeleinrichtung in Abhängigkeit von dem in der gemeinsamen Arbeitsleitung herrschenden Arbeitsdruck eingeregelt. Dabei weist die Druck-Regeleinrichtung ein erstes Regelventil zur Begrenzung des Steuerdrucks auf einen vorgegebenen Maximalwert und ein zweites Regelventil, das den Steuerdruck mit zunehmendem Arbeitsdruck in der Arbeitsleitung reduziert, auf.

Die Ansprüche 2 bis 7 beinhalten vorteilhafte Weiterbildungen der Erfindung.

Entsprechend Anspruch 2 ist das erste Regelventil als Druckreduzierventil und das zweite Regelventil als nachgeschaltetes 3/2-Wegeventil ausgebildet, das zu seiner Ansteuerung über eine Verbindungsleitung mit der Arbeitsdruckleitung verbunden ist. Die das zweite Regelventil ansteuernde Verbindungsleitung kann gemäß Anspruch 3 eine Drosselstelle und einen Hydrospeicher zur Dämpfung und Anpassung an die Dynamik der Verbraucherbelastung aufweisen.

Zur Leistungsregelung kann der Stellkolben der Verstellvorrichtung entsprechend Anspruch 4 und 5 eine über eine der beiden Stelldruckkammern mit der Arbeitsleitung verbundene Stellkolben-Druckkammer aufweisen, in welcher ein auf einen Schwenkhebel einwirkender Schwenkkolben beweglich angeordnet ist. Dabei ändert sich der Hebelarm, mit welchem der Schwenkkolben auf den Schwenkhebel einwirkt, in Abhängigkeit von der Stellung des Stellkolbens und somit in Abhängigkeit von dem Fördervolumen der zugeordneten Verstellpumpe. Durch die Rückwirkung auf ein Leistungs-Regelventil kann auf diese Weise die Leistung der zugeordneten Verstellpumpe eingeregelt werden.

Das von dem Leistungs-Regelventil konstant gehaltene Produkt aus Arbeitsdruck und Fördervolumen kann entsprechend Anspruch 6 durch den Steuerdruck verändert werden, der über die Steuerleitung dem Leistungs-Regelventil zugeführt wird.

An der Steuerleitung kann entsprechend Anspruch 7 besonders vorteilhaft ein Drucksensor vorgesehen sein, um die Leistungsauslastung der Verstellpumpen zu erfassen. Mittels einer Steuereinheit können bei zunehmendem Leistungsbedarf der an der Arbeitsleitung angeschlossenen Verbraucher eine oder mehrere weitere Verstellpumpen zugeschaltet werden und umgekehrt bei sinkendem Leistungsbedarf der Verbraucher einzelne Verstellpumpen abgeschaltet werden.

Ausführungsbeispiele der Erfindung werden nachfolgend unter Bezugnahme auf die Zeichnung näher beschrieben. Darin zeigen:
- Fig. 1: ein Ausführungsbeispiel der erfindungsgemäßen hydraulischen Regeleinrichtung;
- Fig. 2: eine Erweiterung des Ausführungsbeispiels nach Fig. 1;
- Fig. 3: ein p-Q-Diagramm zur Erläuterung der erfindungsgemäßen hydraulischen Regeleinrichtung; und
- Fig. 4: ein p-Q-Diagramm zur Erläuterung des Regelverhaltens der erfindungsgemäßen hydraulischen Regeleinrichtung.

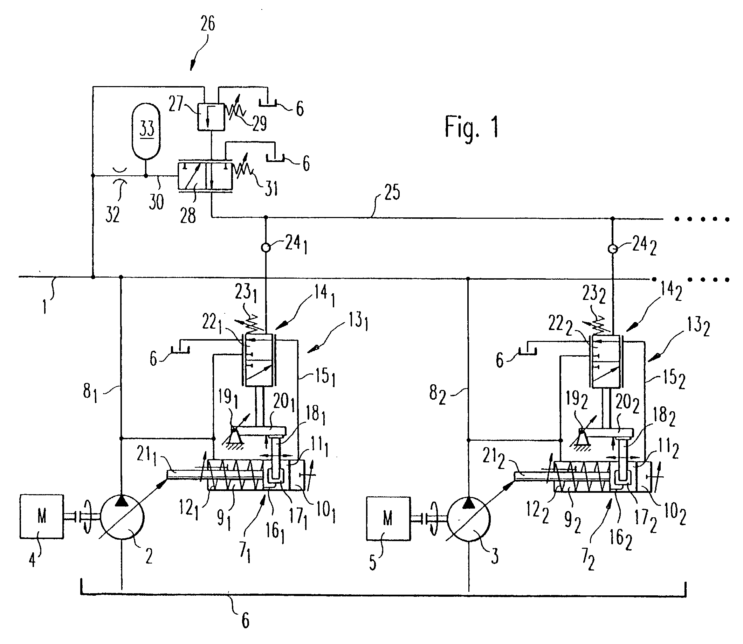

Fig. 1 zeigt ein Ausführungsbeispiel der erfindungsgemäßen hydraulischen Regeleinrichtung zum parallelen Regeln mehrerer in eine gemeinsame Arbeitsleitung 1 fördernder hydrostatischer Verstellpumpen 2, 3.

In Fig. 1 sind zwei Verstellpumpen 2 und 3 dargestellt. Die Regeleinrichtung läßt sich jedoch ohne weiteres auf weitere Verstellpumpen erweitern, was am rechten Rand der Fig. 1 angedeutet ist. Die Verstellpumpen werden im Ausführungsbeispiel durch separate Motoren, vorzugsweise durch Elektromotoren 4 und 5 angetrieben. Die hydrostatischen Verstellpumpen 2 und 3 saugen das Druckfluid aus einem Druckfluid-Tank 6 an und geben dieses über eine Hochdruckleitung 8₁ bzw. 8₂ an eine gemeinsame Arbeitsleitung 1 ab.

Zur Verstellung des Fördervolumens der Verstellpumpen 2 und 3 weist jede Verstellpumpe eine allgemein mit dem Bezugszeichen 7₁ bzw. 7₂ bezeichnete Verstellvorrichtung auf. Jede die Verstellvorrichtung 7₁ bzw, 7₂ umfaßt eine mit der Hochdruckleitung 8₁ bzw. 8₂ verbundene erste Stelldruckkammer 9₁ bzw. 9₂ und eine zweite Stelldruckkammer 10₁ bzw. 10₂, die von der ersten Stelldruckkammer 9₁ bzw. 9₂ durch einen Stellkolben 11₁ bzw. 11₂ getrennt ist. In der ersten Stelldruckkammer 9₁ bzw. 9₂ ist jeweils eine Rückstellfeder 12₁ bzw. 12₂ vorgesehen, die den Stellkolben 11₁ bzw. 11₂ in Richtung auf den in der Fig. 1 rechten Anschlag beaufschlagt, an welchem die zugeordnete Verstellpumpe 2 bzw. 3 mit maximalem Fördervolumen Vₘₐₓ arbeitet.

Für jede Verstellpumpe 2 und 3 ist eine allgemein mit dem Bezugszeichen 13₁ bzw. 13₂ bezeichnete Leistungs-Regeleinrichtung vorgesehen. Die Leistungs-Regeleinrichtung umfaßt ein Leistungs-Regelventil 14₁ bzw. 14₂, das im Ausführungsbeispiel als 3/2-Wegeventil ausgebildet ist, über welches die zweite Stelldruckkammer 10₁ bzw. 10₂ mit der Hochdruckleitung 8₁ bzw. 8₂ der zugehörigen Verstellpumpe 2 bzw. 3 oder mit dem Tank 6 in Verbindung steht. Das Leistungs-Regelventil 14₁ bzw. 14₂ ist zwischen einer ersten Stellung, in welcher die Verbindungsleitung 15₁ bzw. 15₂ mit dem Druckmitteltank 6 in Verbindung steht und einer zweiten Stellung, in welcher die Verbindungsleitung 15₁ bzw. 15₂ in voller Höhe mit dem in der jeweiligen Hochdruckleitung 8₁ bzw. 8₂ herrschenden Arbeitsdruck beaufschlagt ist, kontinuierlich regelbar.

Jeder Stellkolben 11₁ bzw. 11₂ der Verstellvorrichtung 7₁ bzw. 7₂ weist eine über eine Verbindungsleitung 16₁ bzw. 16₂ mit der ersten Stelldruckkammer 9₁ bzw. 9₂ in Verbindung stehende Stellkolben-Druckkammer 17₁ bzw. 17₂ auf. In die Stellkolben-Druckkammer 17₁ bzw. 17₂ greift ein in Fig. 1 in vertikaler Richtung beweglicher Schwenkkolben 18₁ bzw. 18₂ ein, der einen um eine Schwenkachse 19₁ bzw. 19₂ schwenkbaren Schwenkhebel 201 bzw. 20₂ in der in Fig. 1 vertikalen Richtung beaufschlagt. Der Schwenkkolben 18₁ bzw. 18₂ wird seinerseits in der Stellkolben-Druckkammer 17₁ bzw. 17₂ mit dem in der ersten Stelldruckkammer 9₁ bzw. 9₂ und somit in der Arbeitsleitung 1 herrschenden Arbeitsdruck beaufschlagt.

Der Hebelarm, mit welchem der Schwenkkolben 18₁ bzw. 18₂ an dem Schwenkhebel 20₁ bzw. 20₂ angreift, hängt von der Stellung des Stellkolbens 11₁ bzw. 11₂ der zugeordneten Verstellvorrichtung 7₁ bzw. 7₂ ab. Der Stellkolben 11₁ bzw. 11₂ wirkt über eine Kolbenstange 21₁ bzw. 21₂ auf das Fördervolumen der zugeordneten Verstellpumpe 2 bzw. 3 ein. Somit verringert sich das von dem Schwenkkolben 18₁ bzw. 18₂ auf den Schwenkhebel 20₁ bzw. 20₂ ausgeübte Drehmoment aufgrund der Verringerung des Hebelarms mit der Abnahme des Fördervolumens der zugeordneten Verstellpumpe 2 bzw. 3.

Nachfolgend wird die Funktion der Leistungs-Regeleinrichtung 13₁ bzw. 13₂ näher beschrieben. Beim Anlaufen der Verstellpumpen 2 und 3 befindet sich der Stellkolben 11₁ bzw. 11₂ der zugeordneten Verstellvorrichtung 7₁ bzw. 7₂ aufgrund der Beaufschlagung mittels der Rückstellfeder 12₁ bzw. 12₂ an seinem in Fig. 1 rechten Anschlag. Die zugehörige Verstellpumpe 2 bzw. 3 ist dabei auf maximales Fördervolumen ausgeschwenkt. Die zweite Stelldruckkammer 10₁ bzw. 10₂ ist dabei zunächst über das Leistungs-Regelventil 14₁ bzw. 14₂ zum Druckmitteltank 6 hin entlastet, während die erste Stelldruckkammer 9₁ bzw. 9₂ über die jeweilige Hochdruckleitung 8₁ bzw. 8₂ mit der gemeinsamen Arbeitsleitung 1 in Verbindung steht. Über die Verbindungsleitung 16₁ bzw. 16₂ wird die Stellkolben-Druckkammer 17₁ bzw. 17₂ ebenfalls mit dem Arbeitsdruck beaufschlagt, so daß der Schwenkkolben 18₁ bzw. 18₂, der in dieser Position über einen relativ großen Hebelarm an dem Schwenkhebel 20₁ bzw. 20₂ angreift, dadurch ein hohes Drehmoment erzeugt und mit einer relativ großen Kraft auf das Leistungs-Regelventil 14₁ bzw. 14₂ einwirkt und den Schieber 22₁ bzw. 22₂ gegen die von der Rückstellfeder 23₁ bzw. 23₂ ausgeübte Rückstellkraft verschiebt. Dadurch wird die zweite Stelldruckkammer 10₁ bzw. 10₂ über die jeweilige Verbindungsleitung 15₁ bzw. 15₂ und das Leistungs-Regelventil 14₁ bzw. 14₂ zunehmend mit dem Arbeitsdruck beaufschlagt.

Da der Arbeitsdruck in der ersten Stelldruckkammer 9₁ bzw. 9₂ an dem Stellkolben 11₁ bzw. 11₂ aufgrund der Kolbenstange 21₁ bzw. 21₂ mit einer gegenüber der zweiten Stelldruckkammer 10₁ bzw. 10₂ reduzierten Angriffsfläche an dem Stellkolben 11₁ bzw. 11₂ angreift, ergibt sich eine resultierende Kraftkomponente, die den jeweiligen Stellkolben 11₁ bzw. 11₂ in Richtung auf seinen in Fig. 1 linken Anschlag, an welchem die Verstellpumpe 1 bzw. 2 mit minimalem Fördervolumen V_{O} arbeitet, verschiebt. Aufgrund der Verschiebung des Stellkolbens 11₁ bzw. 11₂ nimmt jedoch auch der Hebelarm, mit welchem der Schwenkkolben 18₁ bzw. 18₂ an dem Schwenkhebel 20₁ bzw. 20₂ angreift, ab. Dadurch reduziert sich die von dem Arbeitsdruck über den Schwenkkolben 18₁ bzw. 18₂ und den Schwenkhebel 20₁ bzw. 20₂ auf das Leistungs-Regelventil 14₁ bzw. 14₂ ausgeübte Stellkraft, so daß die Position des Stellkolbens 11₁ bzw. 11₂ auf eine von dem Arbeitsdruck 1 vorgegebene Gleichgewichtsposition eingeregelt wird. Dadurch ergibt sich ein funktionaler Zusammenhang zwischen dem Arbeitsdruck in der gemeinsamen Arbeitsleitung 1 und dem von der Verstellvorrichtung 7₁ bzw. 7₂ vorgegebenen Fördervolumen der jeweiligen Verstellpumpe 2 bzw. 3 derart, daß das Produkt aus dem Arbeitsdruck und dem Fördervolumen auf einen konstanten Wert eingeregelt wird. Dieser konstante Wert ergibt sich aus dem Kräftegleichgewicht im Leistungs-Regelventil 14₁ bzw. 14₂ und ist mittels eines über jeweils einen Steuerdruck-Anschluß 24₁ bzw. 24₂ zugeführten Steuerdrucks veränderbar. Der Steuerdruck wirkt im Ausführungsbeispiel in gleicher Richtung wie die von der Rückstellfeder 23₁ bzw. 23₂ ausgeübte Rückstellkraft und entgegen der von dem Schwenkkolben 18₁ bzw. 18₂ über den Schwenkhebel 20₁ bzw. 20₂ ausgeübten Stellkraft.

Erfindungsgemäß sind sämtliche Steuerdruck-Anschlüsse 24₁ bzw. 24₂ über eine Steuerdruckleitung 25 verbunden, so daß die Leistung (Produkt aus Arbeitsdruck und Fördervolumen) für alle Verstellpumpen 2, 3 einheitlich vorgegeben wird. Auf diese Weise wird eine gleichmäßige Verteilung der Leistungsbelastung auf sämtliche Verstellpumpen 2, 3 erreicht.

Der über die Steuerdruckleitung 25 den Leistungs-Regeleinrichtungen 13₁, 13₂ zugeführte Steuerdruck wird mittels einer sämtlichen Verstellpumpen 2, 3 gemeinsamen zentralen Druck-Regeleinrichtung 26 eingeregelt, wodurch die Gesamtleistung definiert wird. Die Druck-Regeleinrichtung 26 umfaßt ein mit der Arbeitsleitung 1 verbundenes erstes Regelventil 27 zur Begrenzung des Steuerdrucks auf einen vorgegebenen Maximalwert. Beim Ausführungsbeispiel ist das erste Regelventil daher als Druckreduzierventil ausgebildet, das den Druck in der Steuerdruckleitung 25 bei Überschreiten eines durch eine Justierfeder 29 vorgegebenen Maximaldrucks begrenzt und damit die maximale Leistung der Pumpen begrenzt. Ein zweites, dem ersten Regelventil 27 nachgeschaltetes zweites Regelventil 28 reduziert den Steuerdruck mit zunehmendem Arbeitsdruck in der Arbeitsleitung 1. Im Ausführungsbeispiel ist das zweite Regelventil als 3/2-Wegeventil ausgebildet, das durch die Rückstellfeder 31 in seine Grundstellung zurückgeführt wird, und über eine Verbindungsleitung 30 mit der Arbeitsleitung 1 verbunden.

In der Anlaufphase der Verstellpumpen 2 und 3 ist das zweite Regelventil 28 über das vorgeschaltete erste Regelventil 27 ungedrosselt mit der Arbeitsleitung 1 verbunden, so daß die Steuerdruckleitung 25 mit dem vollen Arbeitsdruck beaufschlagt wird. Bei zunehmendem Anstieg des Arbeitsdrucks wird der Druck in der Steuerdruckleitung 25 durch das zweite Regelventil 28 kontinuierlich reduziert. Zur Dämpfung und Anpassung an die Dynamik der Verbraucherbelastung kann die Verbindungsleitung 30 mit einer Drosselstelle 32 und einem zwischen der Drosselstelle 32 und dem zweiten Regelventil 28 in die Verbindungsleitung 30 einmündenden Hydrospeicher 33 versehen sein. Die Zeitkonstante dieses Dämpfungsgliedes ist dabei vorzugsweise so zu bemessen, daß kurzfristige Druckschwankungen in der Arbeitsleitung 1 ausgeglichen werden.

Die erfindungsgemäß ausgebildete hydraulische Regeleinrichtung bildet eine Reihe von Vorteilen. So werden die Verstellpumpen 2, 3 mit großer Genauigkeit in einen Parallelbetrieb eingeregelt, ohne daß es zu einem mengenabhängigen Druckanstieg kommt. An jeder Verstellpumpe ist nur ein Regelventil, nämlich das Leistungs-Regelventil 14₁ bzw. 14₂ notwendig, während die Druck-Regelung zentral für alle Verstellpumpen 2, 3 ausgebildet ist. Dadurch wird der Ventilaufwand für die Regeleinrichtung wesentlich verringert. Aufgrund der relativ großen Steigung der Leistungsregelungs-Kennlinien ist die Schwenkwinkelabweichung der einzelnen Verstellpumpen geringer als bei der bislang üblichen Parallel-Druckregelung.

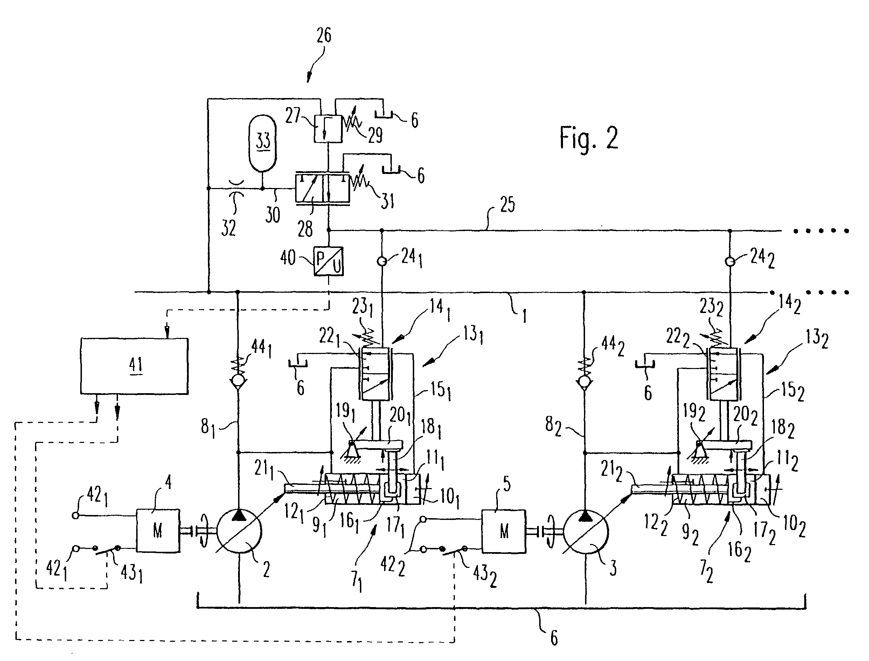

Fig. 2 zeigt eine Erweiterung des Ausführungsbeispiels nach Fig. 1. Die bereits beschriebenen Komponenten sind mit übereinstimmenden Bezugszeichen bezeichnet, so daß sich eine diesbezügliche Beschreibung erübrigt.

Entsprechend der in Fig. 2 gezeigten Weiterbildung ist an der Steuerleitung 25 ein Drucksensor 40 vorgesehen, der den Steuerdruck erfaßt und in ein vorzugsweise elektrisches Drucksignal umwandelt. Das Drucksignal wird einer Steuereinheit 41 zugeführt. Die Antriebsmotoren sind als Elektromotoren 4 und 5 ausgebildet und beziehen ihre elektrische Versorgungsspannung über die Versorgungsklemmen 42₁ bzw. 42₂. Die Motoren 4 und 5 sind über schematisch dargestellte vorzugsweise elektrisch betätigbare Schalteinrichtungen 43₁ und 43₂ zu- und abschaltbar. Die Schalteinrichtungen 43₁ und 43₂ reagieren dabei auf von der elektronischen Steuereinheit 41 ausgegebene Steuersignale.

Da der in der Steuerleitung 25 herrschende Steuerdruck ein Maß für die Leistungsauslastung der Verstellpumpen 2, 3 ist, ermöglicht die erfindungsgemäße Weiterbildung die kontinuierliche Überwachung der verbraucherabhängigen Leistungsauslastung. In einer Pumpstation mit mehreren einzeln über Elektromotoren 4,5 angetriebene Verstellpumpen 2, 3 können somit bei erhöhtem Leistungsbedarf der angeschlossenen Verbraucher einzelne oder mehrere Verstellpumpen 2, 3 zugeschaltet und bei verringertem Leistungsbedarf der Verbraucher abgeschaltet werden. Auf diese Weise kann die Verlustleistung des Pumpensystems verringert werden. Bei abgeschalteten Antriebsmotoren verhindern Rückschlagventile 44₁ und 44₂ in den Hochdruckleitungen 8₁ und 8₂ den Rückfluß.

Besonders vorteilhaft ist dabei, daß der in der Steuerleitung 25 herrschende Steuerdruck, der die Leistung für die Leistungs-Regeleinrichtungen 13₁ und 13₂ vorgibt, gleichzeitig ein Maß für den Leistungsbedarf des Pumpensystems ist. Daher kann der Steuerdruck unmittelbar in ein Schaltsignal für das Zu- bzw. Abschalten einzelner Verstellpumpen 2, 3 umgesetzt werden. Dies ist bei einer konventionellen Regeleinrichtung nur durch Wegmessung der Schwenkpositionen der Verstellpumpen 2, 3 oder Messung des Volumenstroms in der Arbeitsleitung 1 in Verbindung mit der Messung des Arbeitsdrucks möglich. Bei bekannten Leistungs- und Wirkungsgradkennfeldern der Pumpen kann bei Erreichen des maximalen Arbeitsdrucks auch direkt aus dem Steuerdruck der Volumenstrom in der Hochdruckleitung der Einzelpumpen bestimmt werden und durch Multiplikation mit der Anzahl der eingeschalteten Elektromotoren kann der gesamte Volumenstrom kontinuierlich berechnet werden.

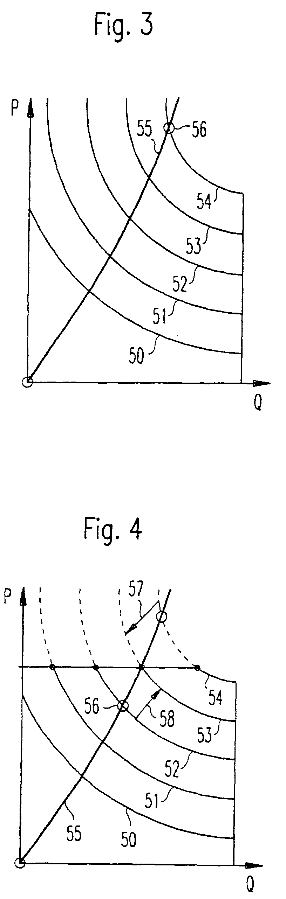

Die Funktion der erfindungsgemäßen hydraulischen Regeleinrichtung wird nachfolgend nochmals anhand der Fig. 3 und 4 verdeutlicht.

Fig. 3 zeigt in einem p-Q-Diagramm (Arbeitsdruck p in der Arbeitsleitung 1 in Abhängigkeit von dem Fördervolumen Q der Verstellpumpen 2, 3) eine Hyperbel-Schar, wobei jede Hyperbel 50 - 54 eine Kurve konstanter Leistung darstellt. Die Leistung, mit welcher die Verstellpumpen 2, 3 fördern, wird durch den Steuerdruck in der Steuerleitung 25 vorgegeben. Dabei entspricht die Hyperbel 50 einer Kurve mit niedrigster Leistung eingestellt durch Feder 23 bei Steuerdruck Null und die Hyperbel 54 einer Kurve mit höchster Leistung angehoben durch den Steuerdruck in der Steuerleitung 25 und begrenzt auf den Maximalwert durch die Ventilfeder 29. Gleichzeitig ist beispielhaft eine Verbraucherkennlinie 55 für einen oder mehrere an der Arbeitsleitung 1 angeschlossene Verbraucher wiedergegeben. Der Schnittpunkt 56 der Verbraucherkennlinie 55 mit der Leistungshyperbel 54 entspricht dem momentanen Betriebszustand der Verstellpumpe 2, 3.

Das erfindungsgemäße Regelverhalten auf konstanten Arbeitsdruck wird anhand der Fig. 4 beschrieben. Wird der am Ventil 28 mit der Feder 31 eingestellte Arbeitsdruck unterschritten, erhöht sich der Steuerdruck in der Steuerleitung 25, so daß die Leistungs-Regeleinrichtungen 13₁ und 13₂ auf einer höheren Hyperbel arbeiten. Der momentane Betriebszustand verschiebt sich auf einen höheren Arbeitsdruck. Wird der eingestellte Arbeitsdruck überschritten, senkt das Ventil 28 den Steuerdruck in der Steuerleitung 25 zunehmend zum Tank 6 ab. Durch Reduzierung der Leistung auf eine niedrigere Kurve verschiebt sich der Schnittpunkt der Verbraucherkennlinie 55 auf einen niedrigeren Arbeitsdruck. Wenn der Schnittpunkt zwischen Verbraucherkennlinie 55 und Leistungshyperbel 50-54 auf den durch das Ventil 28 eingestellten Arbeitsdruck fällt, ist in der Druck-Regeleinrichtung 26 das Gleichgewicht erreicht.

Die Erfindung ist nicht auf das dargestellte Ausführungsbeispiel begrenzt. Es sind eine Reihe alternativer Ausbildungen der Leistungs-Regeleinrichtung und der Druck-Regeleinrichtung im Rahmen des Schutzumfanges der nachfolgenden Patentansprüche möglich. Erfindungswesentlich ist lediglich die dezentrale, jeder Verstellpumpe 2, 3 zugeordnete Leistungsregelung und die zentrale, einheitliche Druckregelung.

## Patentansprüche

1. Hydraulische Regeleinrichtung die mehrere in eine gemeinsame Arbeitsleitung (1) fördernde, hydrostatische Verstellpumpen (2, 3) parallel regelt, mit jeweils einer einer jeden Verstellpumpe (2, 3) zugeordneten Verstellvorrichtung (7₁, 7₂) zum Verstellen des Fördervolumens (Q) der zugeordneten Verstellpumpe (2, 3), jeweils einer einer jeden Verstellpumpe (2, 3) zugeordneten Leistungs-Regeleinrichtung (13₁, 13₂), die das Produkt aus dem Fördervolumen (Q) der zugeordneten Verstellpumpe (2, 3) und dem in der Arbeitsleitung (1) herrschenden Arbeitsdruck (p) auf einen konstanten Wert (pQ) einregelt, der von einem Steuerdruck, mit welchem ein Steuerdruck-Anschluß (24₁, 24₂) der Leistungs-Regeleinrichtung (13₁, 13₂) beaufschlagt ist, abhängt, und einer allen Verstellpumpen (2, 3) gemeinsamen Druck-Regeleinrichtung (26) zum Regeln des sämtlichen Steuerdruck-Anschlüssen (24₁, 24₂) der Leistungs-Regeleinrichtungen (13₁, 13₂) über eine gemeinsame Steuerdruckleitung (25) zugeführten Steuerdrucks, wobei die Druck-Regeleinrichtung (26) ein erstes Regelventil (27) zur Begrenzung des Steuerdrucks auf einen vorgegebenen Maximalwert und ein zweites Regelventil (28), das den Steuerdruck mit zunehmendem Arbeitsdruck in der Arbeitsleitung (1) reduziert, aufweist.

2. Hydraulische Regeleinrichtung nach Anspruch 1,
**dadurch gekennzeichnet,**
**daß** das erste Regelventil (27) der Druckregeleinrichtung (26) als ein mit der Arbeitsleitung (1) verbundenes Druckreduzierventil und das zweite Regelventil (28) als ein dem Druckreduzierventil nachgeschaltetes 3/2-Wegeventil ausgebildet ist, wobei das 3/2-Wegeventil über eine mit der Arbeitsleitung (1) verbundene Verbindungsleitung (30) angesteuert wird.

3. Hydraulische Regeleinrichtung nach Anspruch 2,
**dadurch gekennzeichnet,**
**daß** in der Verbindungsleitung (30) eine Drosselstelle (32) vorgesehen ist und in den Abschnitt zwischen der Drosselstelle (32) und dem zweiten Regelventil (28) ein Hydrospeicher (33) in die Verbindungsleitung (30) einmündet.

4. Hydraulische Regeleinrichtung nach einem der Ansprüche 1 bis 3,
**dadurch gekennzeichnet,**
**daß** jede Verstellvorrichtung (7₁, 7₂) zwei Stelldruckkammern (9₁, 9₂; 10₁, 10₂) aufweist, die durch einen auf das Fördervolumen (Q) der zugeordneten Verstellpumpe (2, 3) einwirkenden Stellkolben (11₁, 11₂) getrennt sind, wobei eine erste Stelldruckkammer (9₁, 9₂) unmittelbar und eine zweite Stelldruckkammer (10₁, 10₂) mittelbar über ein Leistungs-Regelventil (14₁, 14₂) mit der Arbeitsleitung (1) verbunden sind.

5. Hydraulische Regeleinrichtung nach Anspruch 4,
**dadurch gekennzeichnet,**
**daß** der Stellkolben (11₁, 11₂) eine mit der ersten Stelldruckkammer (9₁, 9₂) verbundene Stellkolben-Druckkammer (17₁, 17₂) aufweist, in welcher ein auf einen Schwenkhebel (20₁, 20₂) einwirkender Schwenkkolben (18₁, 18₂) beweglich angeordnet ist, wobei der Hebelarm, mit welchem der Schwenkkolben (18₁, 18₂) auf den Schwenkhebel (20₁, 20₂) einwirkt, von der Stellung des Stellkolbens (11₁, 11₂) abhängt.

6. Hydraulische Regeleinrichtung nach Anspruch 5,
**dadurch gekennzeichnet,**
**daß** die Leistungs-Regeleinrichtungen (13₁, 13₂) Leistungs-Regelventile (14₁, 14₂) umfassen, welche jeweils von einer Kraftdifferenz zwischen einer von dem zugeordneten Schwenkhebel (20₁, 20₂) ausgeübten Stellkraft einerseits und einer von einer Rückstellfeder (23₁, 23₂) und dem Steuerdruck ausgeübten Rückstellkraft andererseits angesteuert werden.

7. Hydraulische Regeleinrichtung nach einem der Ansprüche 1 bis 6,
**dadurch gekennzeichnet,**
**daß** für jede Verstellpumpe (2, 3) jeweils ein unabhängiger Antriebsmotor (4, 5) zum Antrieb der zugeordneten Verstellpumpe (2, 3) vorgesehen ist, und
**daß** an der Steuerdruckleitung (25) ein den Steuerdruck erfassender Drucksensor (40) angeordnet ist, der mit einer Steuereinheit (41) verbunden ist, die in Abhängigkeit von dem mittels des Drucksensors (40) erfaßten Steuerdruck einzelne Antriebsmotoren (4, 5) zuschaltet oder abschaltet.

## Claims

1. Hydraulic control device which controls several hydrostatic variable flow pumps (2, 3) in parallel, in each case delivering into a common operating line (1) with an adjusting device (7₁, 7₂) in each case associated with one of the variable flow pumps (2, 3) to adjust the flow volume (Q) of the associated variable flow pump (2, 3), with a power control device (13₁, 13₂) associated in each case with one ofthe variable flow pumps (2, 3), which sets the product calculated from the volumetric displacement (Q) of the associated variable flow pump (2, 3) and the operating pressure (p) prevailing in the operating line (1) to a constant value (pQ), which depends on a control pressure, to which a control pressure connection (24₁, 24₂) of the power control device (13₁, 13₂) is subjected, and a pressure regulator (26) common to all variable flow pumps (2, 3) for controlling all control pressure connections (24₁, 24₂) of the power control devices (13₁, 13₂) via a common control pressure pipe (25) of the supplied control pressure, whereby the pressure regulator (26) has a first regulating valve (27) for restricting the control pressure to a prescribed maximum value and a second regulating valve (28), which reduces the control pressure with increasing operating pressure in the operating line (1).

2. Hydraulic control device according to claim 1, **characterized in that** the first regulating valve (27) of the pressure regulator (26) is formed as a pressure reduction valve connected to the operating line (1) and the second regulating valve (28) as a 3/2 directional control valve connected downstream to the pressure reduction valve, whereby the 3/2 directional control valve is triggered via a feeder line (30) connected to the operating line (1).

3. Hydraulic control device according to claim 2, **characterized in that** a throttle point (32) is provided in the feeder line (30) and in the section between the throttle point (32) and the second regulating valve (28) a hydro-pneumatic accumulator (33) opens into the feeder line (30).

4. Hydraulic control device according to any one of claims 1 to 3, **characterized in that** each adjusting device (7₁, 7₂) has two adjusting pressure chambers (9₁, 9₂; 10₁, 10₂), which are separated by an adjusting piston (11₁, 11₂) acting upon the volumetric displacement (Q) of the associated variable flow pump (2, 3), whereby a first adjusting pressure chamber (9₁, 9₂) is connected directly and a second adjusting pressure chamber (10₁, 10₂) indirectly via a power regulating valve (14₁, 14₂) to the operating line (1).

5. Hydraulic control device according to claim 4, **characterized in that** the adjusting piston (11₁, 11₂) has an adjusting piston pressure chamber (17₁, 17₂), connected to the first adjusting pressure chamber (9₁, 9₂), in which a pivoted piston (18₁, 18₂) is flexibly arranged, acting upon a pivoted lever (20₁, 20₂), whereby the level arm with which the adjusting piston (18₁, 18₂) acts upon the pivoted lever (20₁, 20₂), depends on the position of the adjusting piston (11₁, 11₂).

6. Hydraulic control device according to claim 5, **characterized in that** the power control device (13₁, 13₂) comprises power regulating valves (14₁, 14₂), which in each case are triggered by a force difference between an adjusting force exerted by the associated pivoted lever (20₁, 20₂) on the one hand and a reset force exerted by a reset spring (23₁, 23₂) and the control pressure on the other hand.

7. Hydraulic control device according to any one of claims 1 to 6, **characterized in that** an independent motor (4, 5) in each case is provided for each variable flow pump (2, 3) to drive the associated variable flow pump (2, 3) and that the control pressure pipe (25) is equipped with a pressure sensor (40), recording the control pressure, which is connected to a control unit (41), that switches individual motors (4, 5) on or off in dependence upon the control pressure recorded by the pressure sensor (40).

## Revendications

1. Dispositif de régulation hydraulique, qui régule en parallèle plusieurs pompes hydrostatiques à déplacement variable qui refoulent dans une conduite de travail commune (1), comprenant un dispositif de déplacement (7₁, 7₂) respectif associé à chacune des pompes à déplacement variable (2, 3) pour modifier le volume refoulé (Q) de la pompe à déplacement variable associée (2, 3), un dispositif de régulation de puissance (13₁, 13₂) respectif associé à chacune des pompes à déplacement variable (2, 3) qui régule le produit du volume refoulé (Q) de la pompe à déplacement variable associée (2, 3) par la pression de travail (p) qui règne dans la conduite de travail (1), à une valeur constante (pQ), laquelle dépend d'une pression de commande avec laquelle est sollicité le raccord (24₁, 24₂) de pression de commande du dispositif de régulation de puissance (13₁,13₂), et
un dispositif de régulation de pression (26) commun à toutes les pompes à déplacement variable (2,3) pour réguler la pression de commande admise à la totalité des raccords de pression de commande (24₁, 24₂) des dispositifs de régulation de puissance (13₁, 13₂) via une conduite de pression de commande commune (25), le dispositif de régulation de pression (26) comprenant une première vanne de régulation (27) pour limiter la pression de commande à une valeur maximale prédéterminée, et une seconde vanne de régulation (28) qui réduit la pression de commande lorsque la pression de travail augmente dans la conduite de travail (1).

2. Dispositif de régulation hydraulique selon la revendication 1, **caractérisé en ce que** la première vanne de régulation (27) du dispositif de régulation de pression (26) est réalisée sous forme d'une vanne de réduction de pression reliée à la conduite de travail (1), et la seconde vanne de régulation (28) est réalisée sous la forme d'une vanne 3 voies-2 positions branchée en aval de la vanne de réduction de pression, ladite vanne 3 voies-2 positions étant pilotée au moyen d'une conduite de liaison (30) reliée à la conduite de travail (1).

3. Dispositif de régulation hydraulique selon la revendication 2, **caractérisé en ce qu'**il est prévu un étranglement (32) dans la conduite de liaison (30), et **en ce qu'**un accumulateur hydraulique (33) débouche dans la conduite de liaison (30) dans le tronçon entre l'étranglement (32) et la seconde vanne de régulation (28).

4. Dispositif de régulation hydraulique selon l'une des revendications 1 à 3, **caractérisé en ce que** chaque dispositif de déplacement (7₁, 7₂) comprend deux chambres de pression de positionnement (9₁, 9₂ ; 10₁, 10₂), lesquelles sont séparées par un piston de positionnement (11₁, 11₂) qui agit sur le volume refoulé (Q) de la pompe à déplacement variable associée (2, 3), une première chambre de pression de positionnement (9₁, 9₂) étant reliée directement à la conduite de travail (1), et une seconde chambre de pression de positionnement (10₁, 10₂) étant reliée indirectement à la conduite de travail (1) via une vanne de régulation de puissance (14₁, 14₂).

5. Dispositif de régulation hydraulique selon la revendication 4, **caractérisé en ce que** le piston de positionnement (11₁, 11₂) comporte une chambre de pression (17₁, 17₂) reliée à à la première chambre de pression de positionnement (9₁, 9₂), dans laquelle est agencé en déplacement un piston de pivotement (18₁, 18₂) qui agit sur un levier pivotant (20₁, 20₂), le bras de levier par lequel le piston de pivotement (18₁, 18₂) agit sur le levier de pivotement (20₁, 20₂) dépendant de la position du piston de positionnement (11₁, 11₂).

6. Dispositif de régulation hydraulique selon la revendication 5, **caractérisé en ce que** les dispositifs de régulation de puissance (13₁, 13₂) comprennent des vannes de régulation de puissance (14₁, 14₂) qui sont respectivement pilotées par une différence de forces entre d'une part une force de positionnement exercée par le levier de pivotement associé (20₁, 20₂), et d'autre part une force de rappel exercée par un ressort de rappel (23₁, 23₂) et par la pression de commande.

7. Dispositif de régulation hydraulique selon l'une des revendications 1 à 6, **caractérisé en ce qu'**il est prévu pour chaque pompe à déplacement variable (2, 3) un moteur d'entraînement respectif indépendant (4, 5) pour l'entraînement de la pompe à déplacement variable associée (2, 3), et **en ce qu'**un capteur de pression (40) qui saisit la pression de commande est agencé sur la conduite de pression de commande (25), ledit capteur étant relié à une unité de commande (41) qui met en route ou qui met à l'arrêt des moteurs d'entraînement individuels (4, 5) en fonction de la pression de commande détectée au moyen du capteur de pression (40).
